# EUROPÄISCHE PATENTANMELDUNG

(11) **EP 3 672 225 A1**
(43) Veröffentlichungstag der Anmeldung: **24.06.2020**
(21) Anmeldenummer: 19212722.3
(22) Anmeldetag: 29.11.2019
(51) Int. Cl.: H04N 5/232, G02B 21/36

(54) **BILDERFASSUNGSGERÄT**

(30) Priorität: 19.12.2018 DE 102018132965
(71) Anmelder: Arnold & Richter Cine Technik GmbH & Co. Betriebs KG, 80807 München (DE)
(72) Erfinder: KEERL, Alexander, 80687 München (DE)
(74) Vertreter: Manitz Finsterwald Patent- und Rechtsanwaltspartnerschaft mbB

(57) **Zusammenfassung**

Ein Bilderfassungsgerät, insbesondere eine digitale Videokamera oder ein digitales Operationsmikroskop, umfasst einen elektronischen Bildsensor, eine Bildsignalverarbeitungseinrichtung, eine Steuereinrichtung und eine elektronische Anzeigeeinrichtung, wobei das Bilderfassungsgerät wahlweise einen Betriebsmodus, in dem der Bildsensor zum Erzeugen von Bildsignalen ansteuerbar ist, oder einen Ruhemodus, in dem der Energieverbrauch des Bilderfassungsgeräts relativ zu dem Betriebsmodus verringert ist, einnimmt. Die elektronische Anzeigeeinrichtung ist eine stromlos informationserhaltende Anzeigeeinrichtung. Die Steuereinrichtung steuert die Anzeigeeinrichtung dazu an, in dem Ruhemodus des Bilderfassungsgeräts eine Zustandsinformation darzustellen, die einen Betriebszustand des Bilderfassungsgeräts nach Verlassen des Ruhemodus repräsentiert.

## Beschreibung

Die vorliegende Erfindung betrifft ein Bilderfassungsgerät, insbesondere eine digitale Videokamera oder ein digitales Operationsmikroskop, mit einem elektronischen Bildsensor, einer dem Bildsensor nachgeordneten Bildsignalverarbeitungseinrichtung, einer Steuereinrichtung und einer elektronischen Anzeigeeinrichtung, wobei das Bilderfassungsgerät dazu ausgebildet ist, wahlweise einen Betriebsmodus, in dem der Bildsensor zum Erzeugen von Bildsignalen ansteuerbar ist, oder einen Ruhemodus, in dem der Energieverbrauch des Bilderfassungsgeräts relativ zu dem Betriebsmodus verringert ist, einzunehmen.

Ein derartiges Bilderfassungsgerät dient zum Aufzeichnen von Bildsequenzen. Das Bilderfassungsgerät kann eine Abbildungsoptik aufweisen, die ein Abbild eines Aufnahmebereichs auf dem Bildsensor erzeugt. Der Bildsensor kann in dem Betriebsmodus des Bilderfassungsgeräts entsprechende elektronische Bildsignale erzeugen. Hierfür kann der Bildsensor, beispielsweise ein CMOS-Sensor, eine zweidimensionale Matrix von lichtempfindlichen Sensorelementen aufweisen. Die dem Bildsensor nachgeordnete Bildsignalverarbeitungseinrichtung kann in dem Betriebsmodus des Bilderfassungsgeräts die Bildsignale des Bildsensors verarbeiten, insbesondere verstärken und digitalisieren, und beispielsweise auch interpolieren, linearisieren, in sonstiger Weise transformieren und/oder komprimieren. Die verarbeiteten Bildsignale können, insbesondere in Form von digitalen Bilddatensätzen, über einen Signalausgang des Bilderfassungsgeräts ausgegeben werden, insbesondere kabelgebunden oder drahtlos. Alternativ oder zusätzlich können die Bildsignale bzw. digitalen Bilddatensätze in dem Bilderfassungsgerät gespeichert werden; hierfür kann das Bilderfassungsgerät einen integrierten Bildspeicher oder einen Anschluss zum Anschließen eines Bildspeichers aufweisen.

Ein derartiges Bilderfassungsgerät kann optional auch einen elektronischen Sucher oder Monitor aufweisen, um den Aufnahmebereich bzw. die aufgezeichnete Bildsequenz beobachten zu können. Ein derartiges Bilderfassungsgerät umfasst ferner die elektronische Anzeigeeinrichtung, an der beispielsweise ein Betriebszustand des Bilderfassungsgeräts dem Benutzer angezeigt werden kann. Die Steuereinrichtung kann verschiedene Komponenten des Bilderfassungsgeräts steuern, insbesondere den Bildsensor, die Bildsignalverarbeitungseinrichtung und/oder die elektronische Anzeigeeinrichtung. Die Steuereinrichtung kann durch eine einzige Steuereinheit oder durch mehrere Einheiten gebildet sein. Das Bilderfassungsgerät kann eine Eingabeeinrichtung aufweisen, über die ein Benutzer entsprechende Befehle oder Einstellungen eingeben bzw. an die Steuereinrichtung übermitteln kann. Zusätzlich zu dem Betriebsmodus, den das Bilderfassungsgerät einnehmen kann, um in der beschriebenen Weise Bildsignale zu erzeugen und zu verarbeiten, kann das Bilderfassungsgerät zumindest einen Ruhemodus einnehmen, in dem der Energieverbrauch gegenüber dem Betriebsmodus verringert ist. Bei dem Ruhemodus kann es sich beispielsweise um einen Abschaltmodus oder einen Energiesparmodus handeln.

Für viele Anwendungen ist es wichtig, dass das Bilderfassungsgerät schnell und fehlerfrei betriebsbereit ist. Insbesondere ist es wichtig, dass das Bilderfassungsgerät mit den korrekten Einstellungen betrieben wird, um eine hohe Bildqualität zu gewährleisten. Beispielsweise können digitale Videokameras für die Produktion von Kinofilmen einen komplexen Aufbau besitzen, wobei eine Vielzahl von unterschiedlichen Betriebsparametern eingestellt und angepasst werden können, was jedoch einen gewissen Zeitaufwand und eine entsprechende Sachkunde des Benutzers erfordert. Bei medizinischen Anwendungen, wie beispielsweise bei einem digitalen Operationsmikroskop oder einem digitalen Endoskop, ist es von größter Bedeutung, dass die Bedienung des Bilderfassungsgeräts auch in einer Stresssituation fehlerfrei erfolgt.

Es ist eine Aufgabe der Erfindung, ein Bilderfassungsgerät bereitzustellen, das ausgehend von einem Ruhemodus schnell und fehlerfrei betrieben werden kann.

Diese Aufgabe wird durch ein Bilderfassungsgerät mit den Merkmalen des Anspruchs 1 gelöst.

Bei einem derartigen Bilderfassungsgerät ist die elektronische Anzeigeeinrichtung als eine stromlos informationserhaltende Anzeigeeinrichtung ausgebildet, und die Steuereinrichtung steuert die Anzeigeeinrichtung dazu an, in dem Ruhemodus des Bilderfassungsgeräts eine Zustandsinformation darzustellen, die einen Betriebszustand des Bilderfassungsgeräts nach Verlassen des Ruhemodus repräsentiert.

Unter einer stromlos informationserhaltenden Anzeigeeinrichtung ist eine elektronisch ansteuerbare Anzeigeeinrichtung zu verstehen, die dazu ausgebildet ist, im Unterschied etwa zu einer Flüssigkristallanzeige oder Leuchtdiodenanzeige ohne oder mit lediglich minimaler Versorgung mit elektrischer Energie die Darstellung einer zuletzt angezeigten Information beizubehalten. Insbesondere kann es sich bei einer derartigen stromlos informationserhaltenden Anzeigeeinrichtung um sogenanntes elektronisches Papier handeln, also eine Anzeigeeinrichtung mit elektronischer Tinte (engl.: "e-ink display"). Bei einem solchen elektronischen Papier kann es sich insbesondere um eine auf dem Prinzip der Elektrophorese basierende Anzeigeeinrichtung mit Mikrokapseln handeln, die beispielsweise positiv geladene weiße Partikel und negativ geladene schwarze Partikel in einem transparenten zähflüssigen Polymer enthalten. Die Darstellung wird durch kurzzeitiges Anlegen einer elektrischen Spannung verändert und bleibt dann über einen längeren Zeitraum stabil, ohne dass ständig eine Spannung anliegen oder ein elektrischer Strom fließen muss. Die stromlos informationserhaltende Anzeigeeinrichtung kann insbesondere zur Darstellung von Text- und Zahleninformation ausgebildet sein.

In dem Betriebsmodus des Bilderfassungsgeräts kann die Anzeigeeinrichtung durch entsprechende elektronische Ansteuerung unterschiedliche Informationen darstellen. Zumindest wenn das Bilderfassungsgerät den Ruhemodus einnimmt, wird an der Anzeigeeinrichtung eine Zustandsinformation dargestellt, die einen nach Verlassen des Ruhemodus eintretenden Betriebszustand des Bilderfassungsgeräts repräsentiert. Hierfür kann die Steuereinrichtung die Anzeigeeinrichtung vor oder mit dem Übergang in den Ruhemodus entsprechend ansteuern, so dass diese Darstellung im Ruhemodus beibehalten wird. Insbesondere kann die Darstellung im Ruhemodus dauerhaft beibehalten werden.

Das Darstellen der Zustandsinformation in dem Ruhemodus des Bilderfassungsgeräts kann insbesondere automatisch erfolgen, also ohne besonderes Zutun des Benutzers.

Der Nutzer kann somit auch im Ruhemodus des Bilderfassungsgeräts schnell und unmittelbar beispielsweise Kenntnis darüber erlangen, welchen Betriebszustand das Bilderfassungsgerät (spätestens) bei einem neuerlichen Übergang in den Betriebsmodus einnehmen wird. Insbesondere kann der betreffende Betriebszustand auf einer gespeicherten Voreinstellung beruhen, die eine schnelle und fehlerfreie Benutzung des Bilderfassungsgeräts nach einem Neustart ermöglicht oder unterstützt. Die dargestellte Zustandsinformation kann beispielsweise auch einen Betriebszustand repräsentieren, den das Bilderfassungsgerät vor dem Einnehmen des Ruhemodus eingenommen hat, insbesondere aufgrund einer von dem Benutzer zuletzt gewählten Einstellung (etwa eines bestimmten Betriebsparameters). Somit kann nach einem Neustart schnell mit der zuletzt gewählten Einstellung weitergearbeitet werden.

Auf diese Weise ist es also möglich, dem Benutzer auch in dem Ruhemodus des Bilderfassungsgeräts, insbesondere während das Bilderfassungsgerät abgeschaltet ist, Informationen zur Kenntnis zu bringen, die für eine schnelle und/oder sichere Inbetriebnahme des Bilderfassungsgeräts relevant sind, wobei die Informationen in Abhängigkeit von vorbestimmten Werten und/oder von einem zuletzt eingenommenen veränderlichen Betriebszustand des Bilderfassungsgeräts ausgewählt werden können. Dem Benutzer kann es hierdurch beispielsweise ermöglicht werden, schnell zu prüfen, ob das Bilderfassungsgerät aktuell so eingestellt ist, dass es nach dem Einschalten (Wechsel in den Betriebsmodus) schnellstmöglich und/oder mit den erwünschten Einstellungen benutzt werden kann.

Die Steuereinrichtung kann in Abhängigkeit beispielsweise von vorbestimmten Einstellungen, zuletzt vorgenommenen Einstellungen oder zuletzt aufgetretenen Ereignissen die an der Anzeigeeinrichtung dargestellte Information flexibel anpassen, insbesondere gemäß vorbestimmten Kriterien, um auch in einem vollständig oder weitgehend abgeschalteten Modus des Bilderfassungsgeräts dem Benutzer einen situationsbezogenen Überblick zu geben. Wie noch im Einzelnen erläutert wird, kann die im Ruhemodus dargestellte Zustandsinformation beispielsweise wichtige Einstellungswerte von Betriebsparametern des Bildsensors oder der Bildsignalverarbeitungseinrichtung, einen Hinweis auf zuletzt aufgetretene Fehler, sonstige Warnhinweise oder eine Checkliste für eine schnelle Inbetriebnahme des Bilderfassungsgeräts umfassen. Um eine solche Information zu erlangen, muss der Benutzer das Bilderfassungsgerät also nicht eigens einschalten. Es erübrigt sich auch die Notwendigkeit, die jeweilige Information dem Benutzer etwa durch Aufkleber oder Handbücher zu vermitteln. Das Bilderfassungsgerät kann somit ausgehend von dem Ruhemodus schnell und fehlerfrei betrieben werden.

Bei einigen Ausführungsformen kann die an der elektronischen Anzeigeeinrichtung dargestellte Zustandsinformation einen Zustand von Komponenten des Bilderfassungsgeräts repräsentieren. Bei diesen Komponenten kann es sich beispielsweise um den Bildsensor, die Bildsignalverarbeitungseinrichtung und/oder die Steuereinrichtung, oder auch um andere Komponenten des Bilderfassungsgeräts (z.B. Beleuchtungsrichtung) handeln.

Bei einigen Ausführungsformen kann die an der elektronischen Anzeigeeinrichtung dargestellte Zustandsinformation einen veränderlichen Betriebsparameter einer Komponente des Bilderfassungsgeräts, insbesondere des Bildsensors und/oder der Bildsignalverarbeitungseinrichtung, repräsentieren. Bei diesem veränderlichen Betriebsparameter kann es sich beispielsweise um eine eingestellte Belichtungszeit, einen eingestellten Blendenwert, einen eingestellten Lichtempfindlichkeitswert, einen eingestellten Wert der Bildaufnahmefrequenz, einen eingestellten Weißabgleichwert, ein eingestelltes Bildformat von erzeugten Bildsignalen bzw. digitalen Bilddatensätzen (z.B. Seitenverhältnis 4:3 oder 16:9) oder um ein Datenformat von erzeugten Bildsignalen (z.B. "ARRIRAW"-Datenformat) handeln.

Bei manchen Bilderfassungsgeräten können bestimmte Betriebsparameter nicht während des laufenden Betriebs geändert werden, sondern das Bilderfassungsgerät muss hierfür temporär ausgeschaltet oder heruntergefahren werden. Bei derartigen Bilderfassungsgeräten ist also ein erster Betriebsparameter des Bildsensors und/oder der Bildsignalverarbeitungseinrichtung (z.B. Belichtungszeit, Blendenwert) vom Benutzer im Betriebsmodus des Bilderfassungsgeräts veränderbar, während ein zweiter Betriebsparameter des Bildsensors und/oder der Bildsignalverarbeitungseinrichtung (z.B. Seitenverhältnis des Bildformats) vom Benutzer nur dadurch veränderbar ist, dass das Bilderfassungsgerät ausgehend von dem Betriebsmodus temporär in den Ruhemodus und nachfolgend wieder in den Betriebsmodus gebracht wird. Bei derartigen Bilderfassungsgeräten erweist sich die Darstellung von veränderlichen Betriebsparametern an der Anzeigeeinrichtung im Ruhemodus des Bilderfassungsgeräts als besonders vorteilhaft, nämlich wenn die dargestellte Zustandsinformation zumindest den zweiten Betriebsparameter des Bildsensors und/oder der Bildsignalverarbeitungseinrichtung repräsentiert und der Benutzer hierdurch bereits im Ruhemodus ersehen kann, welcher Wert für den betreffenden zweiten Betriebsparameter aktuell eingestellt ist. Der Benutzer kann hierdurch leicht erkennen, dass das Bilderfassungsgerät nicht schnell mit einem anderen Wert des zweiten Betriebsparameters in Betrieb genommen werden kann.

Bei einigen Ausführungsformen kann die an der elektronischen Anzeigeeinrichtung dargestellte Zustandsinformation einen bevorstehenden Wartungstermin des Bilderfassungsgeräts repräsentieren. Ein derartiger Wartungstermin kann von der Nutzungsdauer und/oder Nutzungsintensität des Bilderfassungsgeräts abhängen, oder es können beispielsweise feste Zeitintervalle vorgesehen sein. Die Steuereinrichtung des Bilderfassungsgeräts kann in Abhängigkeit von der Nutzungsdauer, der Nutzungsintensität und/oder des Zeitablaufs die Notwendigkeit einer Wartung überwachen und eine entsprechende Information an der Anzeigeeinrichtung darstellen. Dadurch, dass diese Darstellung in dem Ruhemodus des Bilderfassungsgeräts erfolgt, kann die Notwendigkeit einer Wartung vom Benutzer insbesondere auch außerhalb der Nutzung des Bilderfassungsgeräts zuverlässig wahrgenommen werden, und ein entsprechender Wartungstermin kann rechtzeitig eingeplant werden. Insbesondere bei medizinischen Anwendungen, insbesondere bei einem Operationsmikroskop oder einem elektronischen Endoskop, ist es wichtig, dass die Wartungstermine genau eingehalten werden.

Bei einigen Ausführungsformen kann die an der elektronischen Anzeigeeinrichtung dargestellte Zustandsinformation einen zuletzt aufgetretenen Fehler des Bilderfassungsgeräts repräsentieren (z.B. Zeitpunkt, Fehlernummer). Beispielsweise kann es in dem Betriebsmodus des Bilderfassungsgeräts zu Störungen kommen, die die Nutzung des Bilderfassungsgeräts nicht oder nur geringfügig einschränken und daher während der Nutzung des Bilderfassungsgeräts vom Benutzer nicht speziell wahrgenommen oder beachtet werden. Indem jedoch in dem Ruhemodus des Bilderfassungsgeräts eine entsprechende Darstellung an der Anzeigeeinrichtung erfolgt, ist mit höherer Sicherheit gewährleistet, dass der betreffende Fehler wahrgenommen wird, damit möglichst bald Gegenmaßnahmen eingeleitet werden können und die Fehlerursache beseitigt werden kann. Dies trägt dazu bei, die Zuverlässigkeit des Bilderfassungsgeräts bei einer nachfolgenden Nutzung zu erhöhen.

Bei einigen Ausführungsformen kann die an der elektronischen Anzeigeeinrichtung dargestellte Zustandsinformation eine Information über Komponenten des Bilderfassungsgeräts repräsentieren, die nach einem neuerlichen Überführen des Bilderfassungsgeräts in den Betriebsmodus vom Benutzer aktiviert, angeschlossen oder eingestellt werden müssen. Bei diesen Komponenten kann es sich beispielsweise um Einheiten handeln, die nicht für jede Nutzung des Bilderfassungsgeräts im Betriebsmodus benötigt werden oder die im Ruhemodus des Bilderfassungsgeräts entfernt oder ausgeschaltet werden. Derartige Komponenten können fester Bestandteil des Bilderfassungsgeräts oder separate, an das Bilderfassungsgerät jedoch angeschlossene oder anschließbare Einheiten sein. Beispielsweise kann es sich bei derartigen Komponenten um ein Speichermodul (zum Speichern von Bilddaten), einen elektronischen Sucher, einen Monitor, ein Stativ, ein Netzteil, ein Verbindungskabel (für eine Signalübertragung) oder ein Versorgungskabel (für die Zufuhr von elektrischer Energie) handeln. Die dargestellte Zustandsinformation kann insbesondere eine Information darüber enthalten, dass die betreffende Komponente des Bilderfassungsgeräts angeschlossen oder eingeschaltet werden muss, damit dies bei der Inbetriebnahme des Bilderfassungsgeräts (Betriebsmodus) nicht vergessen wird und/oder damit eine korrekte Reihenfolge eingehalten wird. Insbesondere kann die an der elektronischen Anzeigeeinrichtung dargestellte Zustandsinformation eine Checkliste für ein neuerliches Überführen des Bilderfassungsgeräts in den Betriebsmodus umfassen, die vom Benutzer somit auf einfache Weise konsultiert werden kann. Eine solche Checkliste kann von der Steuereinrichtung in Abhängigkeit von dem zuletzt erfassten Betriebszustand des Bilderfassungsgeräts konfiguriert sein.

Bei einigen Ausführungsformen kann die an der elektronischen Anzeigeeinrichtung dargestellte Zustandsinformation eine Information über eine geplante zukünftige Nutzung des Bilderfassungsgeräts repräsentieren. Insbesondere kann in dem Betriebsmodus des Bilderfassungsgeräts an die Steuereinrichtung eine Information (beispielsweise Datum, Uhrzeit, Benutzer und/oder Projektname) über eine solche geplante zukünftige Nutzung übermittelt werden, die von der Steuereinrichtung als aktualisierter Betriebszustand (Reservierung des Bilderfassungsgeräts für nachfolgenden Betriebsmodus) gespeichert wird.

Bei einigen Ausführungsformen kann der Steuereinrichtung ein Speicher zugeordnet sein, in dem die darstellbare Zustandsinformation in verschiedenen möglichen Benutzersprachen gespeichert ist und auch eine Information über eine gewünschte der verschiedenen möglichen Benutzersprachen gespeichert ist, wobei die Steuereinrichtung dazu ausgebildet ist, die Anzeigeeinrichtung zum Darstellen der Zustandsinformation in der gewünschten Benutzersprache anzusteuern. Hierdurch können länderspezifische bzw. sprachenspezifische Anpassungen des Bilderfassungsgeräts vereinfacht werden.

Die stromlos informationserhaltende Anzeigeeinrichtung kann, wie bereits erläutert, zur Darstellung von Text- und Zahleninformation ausgebildet sein und/oder ein sogenanntes elektronisches Papier aufweisen.

Das Bilderfassungsgerät kann zusätzlich zu der stromlos informationserhaltenden Anzeigeeinrichtung eine weitere elektronische Anzeigeeinrichtung aufweisen, die in dem Ruhemodus des Bilderfassungsgeräts jedoch abgeschaltet ist. In dem Betriebsmodus hingegen kann die weitere elektronische Anzeigeeinrichtung dazu dienen, in üblicher Weise eine Zustandsinformation über einen aktuellen Betriebszustand des Bilderfassungsgeräts darzustellen (beispielsweise eingestellte Belichtungszeit, eingestellter Blendenwert, eingestellter Lichtempfindlichkeitswert, eingestellter Wert der Bildaufnahmefrequenz etc.). Die weitere elektronische Anzeigeeinrichtung kann dazu ausgebildet sein, eine derartige Zustandsinformation in schnellerem Wechsel bzw. mit einer kürzeren Latenzzeit als die stromlos informationserhaltende Anzeigeeinrichtung darzustellen, wobei die weitere elektronische Anzeigeeinrichtung hierfür jedoch kontinuierlich mit elektrischer Energie versorgt werden muss. Auch die weitere elektronische Anzeigeeinrichtung kann zur Darstellung von Text- und Zahleninformation ausgebildet sein. Die weitere elektronische Anzeigeeinrichtung kann beispielsweise eine Flüssigkristallanzeige (LED) oder eine Leuchtdiodenanzeige (LED-Anzeige, insbesondere OLED-Anzeige) umfassen.

Was den Ruhemodus des Bilderfassungsgeräts betrifft, so kann bei einigen Ausführungsformen der Ruhemodus des Bilderfassungsgeräts einen Abschaltmodus umfassen, in dem abgesehen von einer elektronischen Überwachung einer Einschalteinrichtung das Bilderfassungsgerät im Wesentlichen abgeschaltet ist. Alternativ oder zusätzlich kann der Ruhemodus bzw. ein weiterer möglicher Ruhemodus des Bilderfassungsgeräts einen Energiesparmodus umfassen (auch als Standby-Modus bezeichnet), in dem der Bildsensor und die Bildsignalverarbeitungseinrichtung deaktiviert sind und die Steuereinrichtung relativ zu dem Betriebsmodus eingeschränkt aktiv ist (wobei eine Restaktivität möglich ist).

Die Steuereinrichtung kann bei einigen Ausführungsformen dazu ausgebildet sein, die Anzeigeeinrichtung zum Darstellen der Zustandsinformation anzusteuern, bevor das Bilderfassungsgerät den Ruhemodus einnimmt.

Damit die Steuereinrichtung die stromlos informationserhaltende Anzeigeeinrichtung zum Darstellen der Zustandsinformation in dem Ruhemodus anzusteuern vermag, kann bei einigen Ausführungsformen die Steuereinrichtung dazu ausgebildet sein, einen voreingestellten Betriebszustand aus einem Speicher auszulesen oder einen aktuell eingestellten Betriebszustand des Bilderfassungsgeräts in dem Betriebsmodus des Bilderfassungsgeräts zu erfassen, und die Anzeigeeinrichtung zum Darstellen der entsprechenden Zustandsinformation anzusteuern, wenn das Bilderfassungsgerät den Ruhemodus einnimmt, insbesondere bevor das Bilderfassungsgerät den Ruhemodus einnimmt.

Die vorstehend erläuterten Ausführungsformen bzw. eine Auswahl hiervon können auch miteinander kombiniert werden, um die jeweiligen Vorteile zu vereinen.

Die Erfindung wird nachfolgend beispielhaft anhand der Zeichnung erläutert.

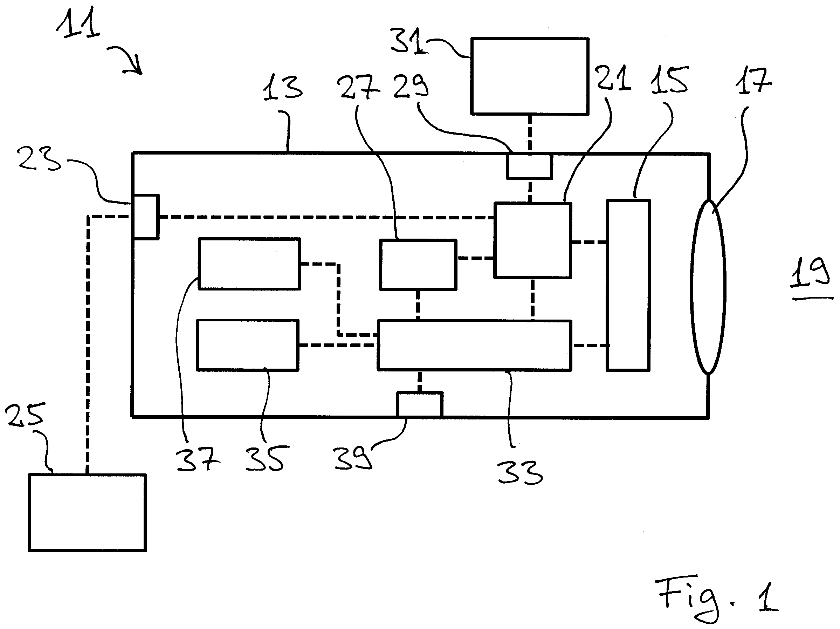

- Fig. 1: zeigt eine schematische Darstellung eines Bilderfassungsgeräts.

Das in Fig. 1 gezeigte Bilderfassungsgerät 11 dient zum Aufzeichnen von Bildsequenzen. Das Bilderfassungsgerät 11 umfasst innerhalb eines Gehäuses 13 einen Bildsensor 15, der in einem Betriebsmodus des Bilderfassungsgeräts 11 elektronische Bildsignale erzeugt. Das Bilderfassungsgerät 11 umfasst ferner eine dem Bildsensor 15 vorgelagerte Abbildungsoptik 17, die ein Abbild eines Aufnahmebereichs 19 auf dem Bildsensor 15 erzeugt. Eine dem Bildsensor 15 nachgeordnete Bildsignalverarbeitungseinrichtung 21 verarbeitet in dem Betriebsmodus des Bilderfassungsgeräts 11 die Bildsignale des Bildsensors15. Die verarbeiteten Bildsignale können über einen Signalausgang 23 des Bilderfassungsgeräts 11 ausgegeben werden, insbesondere an einen angeschlossenen Bilddatenrekorder 25. Die Bildsignalverarbeitungseinrichtung 21 ist ferner mit einem internen Speicher 27 verbunden, in dem die verarbeiteten Bildsignale alternativ oder zusätzlich gespeichert werden können. Der Speicher 27 kann dauerhaft oder lösbar in oder an dem Gehäuse 13 befestigt sein. Die Bildsignalverarbeitungseinrichtung 21 ist über einen Monitorausgang 29 ferner mit einem optionalen elektronischen Monitor 31 verbunden.

Das Bilderfassungsgerät 11 umfasst ferner eine Steuereinrichtung 33, die mit dem Bildsensor 15, der Bildsignalverarbeitungseinrichtung 21, dem Speicher 27, einer stromlos informationserhaltenden Anzeigeeinrichtung 35 und einer weiteren elektronischen Anzeigeeinrichtung 37 verbunden ist, um diese Komponenten zu steuern. Die stromlos informationserhaltende Anzeigeeinrichtung 35 kann ein sogenanntes elektronisches Papier ("e-ink display") umfassen. Die weitere elektronische Anzeigeeinrichtung 37 kann beispielsweise eine Flüssigkristallanzeige umfassen, die in herkömmlicherweise dazu dient, eine Zustandsinformation über einen aktuellen Betriebszustand des Bilderfassungsgeräts 11 (beispielsweise eingestellte Belichtungszeit, eingestellter Blendenwert) darzustellen. Hierfür muss die weitere elektronische Anzeigeeinrichtung 37 kontinuierlich mit elektrischer Energie versorgt werden. Die Steuereinrichtung 33 ist ferner mit einer Eingabeeinrichtung 39 verbunden, über die ein Benutzer Steuerbefehle oder Einstellungen an die Steuereinrichtung 33 übermitteln kann.

Zusätzlich zu dem Betriebsmodus kann das Bilderfassungsgerät 11 einen Ruhemodus einnehmen (Abschaltmodus und/oder Energiesparmodus), in dem der Energieverbrauch gegenüber dem Betriebsmodus verringert ist. In dem Ruhemodus können beispielsweise der Bildsensor 15, die Bildsignalverarbeitungseinrichtung 21 und die weitere elektronische Anzeigeeinrichtung 37 deaktiviert und die Steuereinrichtung 33 relativ zu dem Betriebsmodus eingeschränkt aktiv oder ebenfalls deaktiviert sein.

Die Steuereinrichtung 33 steuert die stromlos informationserhaltende Anzeigeeinrichtung 35 dazu an, in dem Ruhemodus des Bilderfassungsgeräts 11 eine Zustandsinformation darzustellen, die einen Betriebszustand des Bilderfassungsgeräts 11 repräsentiert, den das Bilderfassungsgerät 11 nach einem Verlassen des Ruhemodus bzw. nach einem neuerlichen Übergang in den Betriebsmodus einnehmen wird. Dieser dem Benutzer somit angezeigte Betriebszustand kann auf einer Voreinstellung beruhen (Zurücksetzen auf einen sogenannten Default-Wert).

Beispielsweise kann vorgesehen sein, dass nach einem Neustart eine dem Bilderfassungsgerät 11 zugeordnete Komponente (z.B. Beleuchtungseinrichtung) stets eingeschaltet wird. Der im Ruhemodus angezeigte Betriebszustand kann jedoch auch einem Betriebszustand entsprechen, den das Bilderfassungsgerät 11 vor dem Einnehmen des Ruhemodus eingenommen hat (Beibehaltung einer zuletzt gewählten Einstellung). Für verschiedene Betriebsparameter oder Komponenten des Bilderfassungsgeräts 11 kann auch eine unterschiedliche Vorgehensweise vorgesehen sein (z.B. nach Neustart Einnehmen von voreingestellten Werten von manchen Betriebsparametern und Beibehaltung von zuletzt eingestellten Werten von anderen Betriebsparametern).

Die an der stromlos informationserhaltenden Anzeigeeinrichtung 35 dargestellte Zustandsinformation kann beispielsweise eine oder mehrere der folgenden Informationen umfassen oder repräsentieren:
- einen Zustand von Komponenten des Bilderfassungsgeräts 11;
- einen veränderlichen Betriebsparameter des Bildsensors 15 und/oder der Bildsignalverarbeitungseinrichtung 21;
- einen Betriebsparameter des Bildsensors 15 und/oder der Bildsignalverarbeitungseinrichtung 21, der vom Benutzer nur dadurch veränderbar ist, dass das Bilderfassungsgerät 11 ausgehend von dem Betriebsmodus temporär in den Ruhemodus und nachfolgend wieder in den Betriebsmodus gebracht wird;
- einen bevorstehenden Wartungstermin des Bilderfassungsgeräts 11;
- einen zuletzt aufgetretenen Fehler des Bilderfassungsgeräts 11;
- eine Information über Komponenten des Bilderfassungsgeräts 11, die nach einem neuerlichen Überführen des Bilderfassungsgeräts 11 in den Betriebsmodus vom Benutzer aktiviert, angeschlossen oder eingestellt werden müssen, insbesondere in Form einer Checkliste; und/oder
- eine Information über eine geplante spätere Nutzung des Bilderfassungsgeräts 11.

Auf diese Weise ist es möglich, dem Benutzer auch in dem Ruhemodus des Bilderfassungsgeräts 11 Informationen zur Kenntnis zu bringen, die für eine schnelle und/oder sichere Inbetriebnahme des Bilderfassungsgeräts 11 relevant sind und die jedoch von einem zuletzt eingenommenen veränderlichen Betriebszustand des Bilderfassungsgeräts 11 abhängen können. Die Steuereinrichtung 33 kann somit in Abhängigkeit beispielsweise von vorbestimmten oder zuletzt vorgenommenen Einstellungen, empfangenen Informationen oder Befehlen, oder in Abhängigkeit von zuletzt aufgetretenen Ereignissen die an der stromlos informationserhaltenden Anzeigeeinrichtung 35 dargestellte Information flexibel anpassen. Das Bilderfassungsgerät 11 kann somit ausgehend von dem Ruhemodus schnell und fehlerfrei betrieben werden.

Bei dem Bilderfassungsgerät 11 kann es sich um eine digitale Videokamera, ein digitales Operationsmikroskop oder ein digitales Endoskop handeln. Bei der Anwendung als digitale Videokamera können beispielsweise auch eine Schulterstütze oder ein elektronischer Sucher vorgesehen sein (nicht gezeigt). Bei der Anwendung als digitales Operationsmikroskop kann das Bilderfassungsgerät 11 beispielsweise noch ein Stativ umfassen oder an einem Stativ befestigt sein (nicht gezeigt).

### Bezugszeichenliste

- 11: Bilderfassungsgerät
- 13: Gehäuse
- 15: Bildsensor
- 17: Abbildungsoptik
- 19: Aufnahmebereich
- 21: Bildsignalverarbeitungseinrichtung
- 23: Signalausgang
- 25: Bilddatenrekorder
- 27: Speicher
- 29: Monitorausgang
- 31: Monitor
- 33: Steuereinrichtung
- 35: stromlos informationserhaltende Anzeigeeinrichtung
- 37: weitere elektronische Anzeigeeinrichtung
- 39: Eingabeeinrichtung

## Patentansprüche

1. Bilderfassungsgerät (11), insbesondere digitale Videokamera oder digitales Operationsmikroskop,
mit einem elektronischen Bildsensor (15),
einer dem Bildsensor (15) nachgeordneten Bildsignalverarbeitungseinrichtung (21),
einer Steuereinrichtung (33), und
einer elektronischen Anzeigeeinrichtung,
wobei das Bilderfassungsgerät (11) dazu ausgebildet ist, wahlweise einen Betriebsmodus, in dem der Bildsensor (15) zum Erzeugen von Bildsignalen ansteuerbar ist, oder einen Ruhemodus, in dem der Energieverbrauch des Bilderfassungsgeräts (11) relativ zu dem Betriebsmodus verringert ist, einzunehmen,
wobei die elektronische Anzeigeeinrichtung eine stromlos informationserhaltende Anzeigeeinrichtung (35) ist, und
wobei die Steuereinrichtung (33) dazu ausgebildet ist, die stromlos informationserhaltende Anzeigeeinrichtung (35) dazu anzusteuern, in dem Ruhemodus des Bilderfassungsgeräts (11) eine Zustandsinformation darzustellen, die einen Betriebszustand des Bilderfassungsgeräts (11) nach Verlassen des Ruhemodus repräsentiert.

2. Bilderfassungsgerät (11) nach Anspruch 1,
wobei die dargestellte Zustandsinformation einen Zustand von Komponenten des Bilderfassungsgeräts (11) repräsentiert, insbesondere einen bei einem neuerlichen Einnehmen des Betriebsmodus eingestellten Zustand von Komponenten des Bilderfassungsgeräts (11) oder einen zuletzt eingestellten Zustand von Komponenten des Bilderfassungsgeräts (11).

3. Bilderfassungsgerät (11) nach Anspruch 1 oder 2,
wobei die dargestellte Zustandsinformation einen veränderlichen Betriebsparameter des Bildsensors (15) und/oder der Bildsignalverarbeitungseinrichtung (21) repräsentiert, insbesondere ein Bildformat von erzeugten Bilddaten oder ein Datenformat von erzeugten Bilddaten.

4. Bilderfassungsgerät (11) nach einem der vorhergehenden Ansprüche,
wobei ein erster Betriebsparameter des Bildsensors (15) und/oder der Bildsignalverarbeitungseinrichtung (21) vom Benutzer im Betriebsmodus des Bilderfassungsgeräts (11) veränderbar ist und ein zweiter Betriebsparameter des Bildsensors (15) und/oder der Bildsignalverarbeitungseinrichtung (21) vom Benutzer nur dadurch veränderbar ist, dass das Bilderfassungsgerät (11) ausgehend von dem Betriebsmodus temporär in den Ruhemodus und nachfolgend wieder in den Betriebsmodus gebracht wird, wobei die dargestellte Zustandsinformation zumindest den zweiten Betriebsparameter des Bildsensors (15) und/oder der Bildsignalverarbeitungseinrichtung (21) repräsentiert.

5. Bilderfassungsgerät (11) nach einem der vorhergehenden Ansprüche,
wobei die dargestellte Zustandsinformation einen bevorstehenden Wartungstermin des Bilderfassungsgeräts (11) repräsentiert.

6. Bilderfassungsgerät (11) nach einem der vorhergehenden Ansprüche,
wobei die dargestellte Zustandsinformation einen zuletzt aufgetretenen Fehler des Bilderfassungsgeräts (11) repräsentiert.

7. Bilderfassungsgerät (11) nach einem der vorhergehenden Ansprüche,
wobei die dargestellte Zustandsinformation eine Information über Komponenten des Bilderfassungsgeräts (11) repräsentiert, die nach einem neuerlichen Überführen des Bilderfassungsgeräts (11) in den Betriebsmodus vom Benutzer aktiviert, angeschlossen oder eingestellt werden müssen.

8. Bilderfassungsgerät (11) nach einem der vorhergehenden Ansprüche,
wobei die dargestellte Zustandsinformation eine Information über eine geplante zukünftige Nutzung des Bilderfassungsgeräts (11) repräsentiert.

9. Bilderfassungsgerät (11) nach einem der vorhergehenden Ansprüche,
wobei der Steuereinrichtung (33) ein Speicher zugeordnet ist, in dem die darstellbare Zustandsinformation in verschiedenen möglichen Benutzersprachen gespeichert ist und auch eine Information über eine gewünschte der verschiedenen möglichen Benutzersprachen gespeichert ist, und wobei die Steuereinrichtung (33) dazu ausgebildet ist, die stromlos informationserhaltende Anzeigeeinrichtung (35) zum Darstellen der Zustandsinformation in der gewünschten Benutzersprache anzusteuern.

10. Bilderfassungsgerät (11) nach einem der vorhergehenden Ansprüche,
wobei die stromlos informationserhaltende Anzeigeeinrichtung (35) ein elektronisches Papier aufweist.

11. Bilderfassungsgerät (11) nach einem der vorhergehenden Ansprüche,
wobei das Bilderfassungsgerät (11) eine weitere elektronische Anzeigeeinrichtung (37) aufweist, die in dem Ruhemodus des Bilderfassungsgeräts (11) abgeschaltet ist.

12. Bilderfassungsgerät (11) nach einem der vorhergehenden Ansprüche,
wobei der Ruhemodus des Bilderfassungsgeräts (11) einen Abschaltmodus umfasst, in dem abgesehen von einer elektronischen Überwachung einer Einschalteinrichtung das Bilderfassungsgerät (11) im Wesentlichen abgeschaltet ist.

13. Bilderfassungsgerät (11) nach einem der vorhergehenden Ansprüche,
wobei der Ruhemodus des Bilderfassungsgeräts (11) einen Energiesparmodus umfasst, in dem der Bildsensor (15) und die Bildsignalverarbeitungseinrichtung (21) deaktiviert sind und die Steuereinrichtung (33) relativ zu dem Betriebsmodus eingeschränkt aktiv ist.

14. Bilderfassungsgerät (11) nach einem der vorhergehenden Ansprüche,
wobei die Steuereinrichtung (33) dazu ausgebildet ist, die stromlos informationserhaltende Anzeigeeinrichtung (35) vor oder mit dem Übergang in den Ruhemodus zum Darstellen der Zustandsinformation anzusteuern, so dass die Darstellung der Zustandsinformation im Ruhemodus beibehalten wird.
